# EUROPEAN PATENT SPECIFICATION

(11) **EP 2 409 791 B1**
(45) Date of publication and mention of the grant of the patent: **06.02.2019**
(21) Application number: 11174416.5
(22) Date of filing: 18.07.2011
(51) Int. Cl.: B01D 53/86, B09C 1/00, B09B 3/00, B09C 1/06, F23C 13/08, F23G 7/07, F23C 13/02, F23C 13/04

(54) **Catalytic system, method and use of the system for the removal of contaminants from a material**
Katalytisches System, Verfahren und Verwendung des Systems zum Entfernen von Kontaminanten aus einem Material
Système catalytique, méthode et utilisation du système pour la suppression de contaminants à partir d'un matériau

(30) Priority: 19.07.2010 EP 10170017
(43) Date of publication of application: 25.01.2012
(73) Proprietor: Deep Green SA, 7100 La Louvière (BE)
(72) Inventor: Saadaoui, Hatem, 1190 Bruxelles (BE); Zwaan, Harry, 2595 GK Den Haag (NL); Falcinelli, Ugo, 7090 Braine-le-Comte (BE)
(74) Representative: Vanhalst, Koen

(56) References cited:
- EP-B1- 1 604 749
- WO-A2-2004/103587
- US-A- 5 424 045
- Bruckner et. al.: "Bodenluftabsaugung" In: Neumaier: "Altlasten, Erkennen, Bewerten, Sanieren", 31 December 1996 (1996-12-31), Springer, Berlin, XP002613716, ISBN: 3540593160 pages 410-430, * page 410 - page 430 *

## Description

### Field of the invention

The present invention relates to the field of material remediation. The invention relates to systems for cleaning materials containing contaminants, and more in particular to a system for volatilizing contaminants present in or on the material by thermal conduction and effectively and efficiently removing these contaminants from the material. The invention further relates to a method for cleaning a material using said systems.

### Background

The contamination of materials has become a matter of great concern in many locations. Material may become contaminated with chemical, biological, and/or radioactive contaminants. Material spills, leaking storage vessels, and landfill seepage of improperly disposed materials are just a few examples of the many ways in which material may become contaminated. If left in place, many of these contaminants will find their way into aquifers, air, or into the food supply, and could become public health hazards.

Many methods have been proposed for removal of contaminants, such as excavation followed by incineration, *in situ* vitrification, biological treatment, chemical additives for deactivation, radiofrequency heating, etc. Although successful in some applications, these methods can be very expensive, and not practical if many tons of material must be treated, requiring a lot of space for the installation of treatment equipment.

Methods are known wherein a contaminated material is heated, vaporized material contaminants are extracted out of the material and decomposed or destroyed on site e.g. in a thermal treatment system. However, heating of the material as well as thermally treating the material contaminants extracted out of the material are both processes which require the input of a substantial amount of energy. It would be beneficial that a system could be available which requires less input of energy.

A process requiring less energy because an excavation step may be abandoned, is the removal of contaminants from subsurface materials such as soils using a material vapor extraction process. In such process a negative pressure or vacuum is applied to the material to draw air and vapor through subsurface material. The vacuum may be applied at a material/air interface, or the vacuum may be applied through vacuum wells placed within the material. The air and vapor may entrain and carry volatile contaminants towards the source of the vacuum. Off-gas removed from the material by the vacuum which includes contaminants that were within the material is then transported to a separate treatment facility wherein it is processed to eliminate, or reduce contaminants to acceptable levels. It would be beneficial to reduce transportation costs and/or to increase the effectiveness of the extraction procedure.

*In situ* thermal desorption may be used to increase the effectiveness of a material vapor extraction process. *In situ* thermal desorption involves *in situ* heating of the material to raise the temperature of the material while simultaneously removing off-gas from the material. Heat added to contaminated material may raise the temperature of the material and may cause or accelerate the contaminants to vaporize. A vacuum applied to the material allows drawing the vaporized contaminant out of the material. This method however requires increased energy input compared to the vacuum extraction process. There remains a need in the art for improved treatment processes and systems. The present invention aims to provide a solution to the above-mentioned problem by providing a system for cleaning a material containing contaminants which is more efficient in view of space and energy requirements. In particular, the present invention aims to provide an improved nearly closed loop method and system for cleaning a material containing contaminants.

### Summary of the invention

The present invention relates to a nearly closed loop system for cleaning a material containing contaminants, to uses of such system and to a method for cleaning a material as defined in the appended claims. The methods and systems disclosed herein are meant for cleaning material from contaminants.

The system is particularly suitable for removing any volatile or semi-volatile contaminant like oil or other organic or oil-like contaminants from soils, metal scrap or scales, mineral tailings or any kind of product, even products considered as waste, contaminated with volatile and semi-volatile contaminants. The methods and systems disclosed herein may be applied for cleaning contaminated soil *in situ* as well as *ex situ (on site* as well as off *site).*

In a first aspect, the present invention provides a nearly closed loop system for cleaning a material containing contaminants comprising:
- means for transferring heat to said material, the means comprising at least one pipe system which comprises a perforated pipe and a main pipe such that a space is created between the main pipe and the perforated pipe, wherein at least one of the pipes is heat-conductive,
- means for forcing a contaminant vapor, generated by heating and applying a pressure difference to the contaminated material to a temperature adequate to cause vaporization of the contaminants, out of said material into the pipe system, said means comprising a fan, vacuum or suction system connected to the pipe system, and
- a first means for destructing the contaminant vapor, said first means comprising an inlet and an outlet, wherein said inlet is connected to the fan, vacuum or suction system for receiving the contaminant vapor and wherein said outlet is connected to the pipe system for transferring heat of the means for destructing the contaminant vapor to the material, thereby providing a nearly closed loop;
**characterized in that** said first means for destructing the contaminant vapor comprises a first resistance heater element and/or a first oxidation catalyst, wherein the resistance heater element and/or the oxidation catalyst are capable, alone or together, of raising the temperature of the contaminant vapor to a temperature sufficient for destructing said received contaminant vapor, and characterized in that the nearly closed loop system comprises a second means for destructing the contaminant vapor comprising a second oxidation catalyst and a second resistance heater element for raising the temperature of the contaminant vapor to a temperature sufficient for destructing said contaminant vapor.

Further disclosed is a nearly closed loop system for cleaning a material containing contaminants comprising:
- means for heating said material, said means comprising at least one heat-conductive pipe which comprises a perforated or not perforated outer pipe closed at one end and provided with a non perforated inner pipe of a smaller diameter such that a space is created between the inner pipe and the closed end of the outer pipe,
- means for forcing a contaminant vapor, generated by heating the contaminated material to a temperature sufficient to cause vaporization of said contaminants, out of said material into said at least one heat-conductive pipe, said means comprising a vacuum system connected to said heat-conductive pipe, and
- a first means for destructing said contaminant vapor, said first means comprising an inlet and an outlet, wherein said inlet is connected to said vacuum system for receiving said contaminant vapor and said outlet is connected to said heat-conductive pipe for transferring heat of said means for destructing to said means for heating, thereby providing a nearly closed loop;
**characterized in that** said first means for destructing comprises a first oxidation catalyst and a first resistance heater element, wherein the resistance heater element in its active form is capable of raising the temperature of said first oxidation catalyst to a temperature sufficient for destructing contaminants in said received contaminant vapor.

The system can further comprise a second means for destructing said contaminant vapor, such that said vacuum system is positioned in between said first and said second means for destructing said contaminant vapor. Preferably, said second means is connected to the means for heating the material and the vacuum system.

Said first oxidation catalyst can comprise a precious metal; preferably selected from rhodium, palladium or platinum.

Said first oxidation catalyst can be deposited on a carrier in the form of a granular bed or a monolith.

Said first resistance heater element in working condition can be capable of raising the temperature of said catalyst to a temperature between 200°C and 450°C, preferably between 250°C and 350 °C.

Said first resistance heater element can be provided in the form of a coil or a wire or a tubular heating element.

Said vacuum system can comprise a fan with an adjustable speed of rotation.

Said second means for destructing the contaminant vapor can be connected to the vacuum system, such that the vacuum system is positioned in between said first and said second means for destructing the contaminant vapor.

Said second means for destructing the contaminant vapor can comprise a second resistance heater element and/or a second oxidation catalyst for raising the temperature of the contaminant vapor to a temperature sufficient for destructing the contaminant vapor. Said system can further comprise means for recovering energy out of potential exhaust gasses and for transferring that energy to fresh air that is used to replace the exhaust. Said means for recovering energy and for transferring energy can comprise a heat exchanger.

In a second aspect, the invention provides use of a system according to the invention for removing any volatile or semi-volatile contaminants, such as oil, oil-like or organic contaminants, from soils, steel cuttings or mineral tailings.

In a third aspect, the invention provides a method for cleaning a material containing contaminants comprising the steps of:
a) providing a system according to the invention,
b) optionally, sending a flow of electric current through the first resistance heater element to raise the temperature of the vapor to between 200°C and 450°C, preferably between 250°C and 350°C,
c) optionally, interrupting the flow of electric current,
d) leading a composition comprising a fuel and oxygen over the first catalyst for combustion, thereby raising said temperature further to a pre-determined temperature T1 and providing a heated fluid of said temperature T1 sufficient to cause vaporization of the contaminants present in said material,
e) optionally, interrupting the lead of fuel and oxygen when an adequate temperature has been reached,
f) transferring said heated fluid to the pipe system and forcing the contaminant vapor out of the material into one or more perforated pipes to obtain a flow of the contaminant vapor from the material in the system,
g) optionally, venting at least part of the flow of the contaminant vapor from the system,
h) transferring the flow of the contaminant vapor to the first means for destructing the contaminant vapor,
i) in said first means for destructing the contaminant vapor, leading the flow of the contaminant vapor over the first means for incineration of the contaminant vapor thereby removing at least part of the contaminants from the contaminant vapor and providing heat energy,
j) transferring the flow of contaminant vapor obtained from the contaminated material to a second means for destructing the contaminant vapor prior to venting the flow of the contaminant vapor from the system, thereby removing at least part of the contaminants from the contaminant vapor,
k) using the heat energy obtained in step j) for heating the material containing contaminants to vaporize the remaining contaminants in the material, thereby obtaining a decontaminated material.

At least part of the contaminants can be removed from the contaminant vapor by resistance heating and/or catalytic oxidation in the means for destructing the contaminant vapor.

The material can be selected from the group consisting of: soils, steel cuttings, or mineral tailings; preferably contaminated with any volatile or semi-volatile contaminants such as oil, oil-like or other organic contaminants.

Said heating and optionally partial destruction of said contaminant vapor can be executed by leading said flow of said contaminant vapor over a resistance heater element provided in the form of a coil or a wire or a tubular heating element.

Said catalytic oxidation can be executed by leading said flow of said contaminant vapor over a catalyst comprising a metal or metal oxide, preferably said catalyst comprises a precious metal; preferably said precious metal is selected from rhodium, palladium or platinum.

The system disclosed herein has the advantage to allow the combination of resistance heating and catalytic oxidation heating. The first is preferred for the good functioning of the second for some kinds of contaminants, the first is sufficient for other kinds of contaminants (highly volatile) and the second can be sufficient for some kinds of situations (high temperature needed in material).

The system disclosed herein has the advantage that the combustion catalytic unit may be designed much smaller than a separate, conventional oxidizer unit with comparable gas flow. This reduces operational expenses. An improved control of vacuum and/or of the differential control on each pipe is possible. Such a system can have improved heat efficiency. Pressure drop efficiency can also be improved.

With the method disclosed herein an improved cleaning efficiency, ease of operation and a reduced carbon foot print may be obtained. Part of the heat energy obtained by treating the material contaminants is recuperated and re-used.

Furthermore, since the contaminants are typically combustible and the fluid circulating within the nearly closed loop contains oxygen, the destruction of contaminants will participate to the energy needs.

This additional catalytic oxidation caused by the contaminant oxidation, may allow the resistance element to be used for a shorter time. In some situations, the resistance element would not be needed at all.

Furthermore, the heating obtained by the resistance element may in itself lead to contaminant oxidation for contaminants with low oxidation temperature, allowing catalytic oxidation to be used for a shorter time. In some situations, the catalyst would not have to be used at all.

Alternatively, the heater element may allow catalytic oxidation without use of additional fuel (passive catalytic oxidation).

Alternatively, said heater element could be a small local burner targeting the same region in the system as the resistance element would do.
The foregoing and other objects, features and advantages will become more readily apparent from the following detailed description of preferred embodiments which proceed with reference to the accompanying drawings. In the following passages different aspects are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### Detailed description of the figures

FIG. 1 is an illustration of a preferred embodiment of a material remediation system according to the present disclosure.
FIG. 2 is an illustration of an embodiment of a material remediation system according to the present disclosure.

The following denominations are used in the figures:
- 1: nearly closed loop system
- 2: contaminated material
- 3: pipe system
- 4: perforations
- 5: fluid introduction pipe
- 6: vapor collection pipe
- 7: second oxidation catalyst
- 8: vacuum system
- 9: fuel introduction conduit
- 10: second resistance heater element
- 11: thermocouple
- 12: heat exchanger
- 13: first chamber
- 14: second chamber
- 15: tip
- 16: exhaust
- 17: safety valve
- 18: exhaust tube
- 19: main pipe
- 20: perforated pipe
- 21: fuel valve
- 22: oxygen valve
- 23: first oxidation catalyst
- 24: first resistance heater element
- 25: pressure probe
- 26: oxygen measurement device
- 27: thermocouple
- 28: thermocouple
- 29: exhaust valve

### Detailed description of the invention

The following section provides a more detailed description of the methods and devices disclosed herein. It is to be understood that this disclosure is not limited to particular methods, components, or devices described herein. Such methods, components, and devices may, of course, vary from the exemplified embodiments described herein. It is also to be understood that the terminology used herein is not intended to be limiting, since the scope of the present invention will be limited only by the appended claims.
Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope, and form different embodiments, as would be understood by those in the art.
As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosure. It is to be understood that the value to which the modifier "about" refers is itself also specifically, and preferably, disclosed.

Unless otherwise defined, all terms used herein, including technical and scientific terms, have the meaning as commonly understood by one of ordinary skill in the art to which this disclosure belongs. By means of further guidance, definitions for the terms used in the description are included to better appreciate the teaching of the present disclosure.

The present disclosure relates to a system for cleaning a material containing contaminants.

In a first aspect, the present disclosure provides a nearly closed loop system for cleaning a material containing contaminants comprising:
- means for transferring heat to said material, the means comprising at least one pipe system which comprises a perforated pipe and a main pipe such that a space is created between the main pipe and the perforated pipe, wherein at least one of the pipes is heat-conductive,
- means for forcing a contaminant vapor, generated by heating and applying a pressure difference to the contaminated material to a temperature adequate to cause vaporization of the contaminants, out of said material into the pipe system, said means comprising a fan, vacuum or suction system connected to the pipe system, and
- a first means for destructing the contaminant vapor, said first means comprising an inlet and an outlet, wherein said inlet is connected to the vacuum system for receiving the contaminant vapor and wherein said outlet is connected to the pipe system for transferring heat of the means for destructing the contaminant vapor to the material, thereby providing a nearly closed loop;
**characterized in that** said first means for destructing the contaminant vapor comprises a first oxidation catalyst and/or a first resistance heater element, wherein the resistance heater element and/or the oxidation catalyst are capable, alone or together, of raising the temperature of the contaminant vapor to a temperature sufficient for destructing said received contaminant vapor, and characterized in that the nearly closed loop system comprises a second means for destructing the contaminant vapor.
In an embodiment of the current disclosure, the first means for destructing the contaminant vapor comprises a first oxidation catalyst and a first heater element, preferably a first resistance heater element. In an embodiment of the current disclosure, the second means for destructing the contaminant vapor comprises a second oxidation catalyst and/or a second heater element, preferably a second resistance heater element. In an embodiment of the current disclosure, the second means for destructing the contaminant vapor comprises a second oxidation catalyst and a second resistance heater element.

As used herein, the terms "vacuum" and "suction" are used interchangeably, and refer to a force or negative pressure that causes a fluid or solid to be drawn into an interior space or to adhere to a surface because of the difference between the external and internal pressures.

As used herein, the term "material" may be contaminated soil, cuttings or waste. The terms "contaminated soil" and "soil containing contaminants" are used herein as synonyms and are to be understood as including all types of soils which may be contaminated with chemical and/or biological contaminants, including but not limited to frozen soils, very wet soils, soils with a high clay content, soil containing coal residues, sediments, slurry, sludge, contaminated waste, cakes or the like, etc.

As used herein, the term "contaminant" refers to any undesired product or compound. Contaminants that may be suitably treated are volatile or semi-volatile.

By the term "cuttings" it is meant the portions of a physical object obtained by cutting. Particularly useful in a method of the disclosure are metal or steel cuttings. Metals or steel are often cut, laminated, rolled, pressed, or crushed using cutting fluids. Cutting fluids are fluids that are used in machining to cool and lubricate the cutting tool. Cutting fluids include oils, oil-water emulsions, pastes, gels and mists. They may be made from petroleum distillates, animal fats, plant oils, or other raw ingredients. Oils or lubricants for use as cutting fluids are called cutting oils. Cuttings obtained by the machining of materials such as metal or steel may thus be contaminated with oil or other organic contaminants. It is preferred for some applications that the oil be removed from the cuttings prior to use of the cuttings in a follow-on application. Oils that may be removed using the system or method of the disclosure are transmission fluids, engine oils, gear oils, hydraulics fluids, naphthenic oils, paraffinic oils, chainsaw and cutter bar lubricants.

The material may alternatively be waste. Shredding factories that recycle cars produce mineral wastes. These are often contaminated with organic contaminants. For further recycling, recovery or disposal it is often required to remove the organic contaminants first. The system of the disclosure may be used for this purpose. Suitable waste material for use in a system or method according to an embodiment of the disclosure can e.g. be shredded plastics issued from car recycling factories, filter cakes from water treatment system or other processes using filters and other crushed materials.

The system or method of the disclosure is particularly suitable for the treatment of soils contaminated with hydrocarbons such as gasoline, diesel, kerosene and other light-end oils and chlorinated products such as polychlorinated biphenyls (PCBs), dioxins (polychlorinated dibenzodioxins) and polychlorinated dibenzofurans (PCDFs). Polyaromatic hydrocarbons can also be treated using the method or system according to the disclosure, depending on contamination levels and other soil characteristics. Other contaminants suitable for thermal treatment include trinitrotoluene (TNT), nitrocellulose, chlorinated solvents, waste oils, and cyanides.

Heat by conduction takes place when two material media or objects are in direct contact, and the temperature of one is higher than the temperature of the other. Heat conduction consists of a transfer of kinetic energy from the warmer medium to the cooler one. The term "conduction" as used herein is therefore meant to refer to all types of heat transfer wherein heat is moved from one (warmer) object to another (cooler) object by direct contact. It shall be understood that in the present disclosure, when referring to heat transfer by conduction, also a small amount of heat can generally be transferred to the soil by means of radiation.

The present disclosure relates to a nearly closed loop system of one or more pipes embedded in the contaminated material, which can be *in situ,* built into pile or can be contained in a vessel or container, wherein the pipes may be perforated and/or heat-conductive. In a preferred embodiment, the main pipe is heat conductive. In a preferred embodiment, the fluid introduction pipe is heat conductive. In an embodiment, the perforated pipe is heat conductive. In an embodiment, the vapor collection pipe is heat conductive. For reasons of clarity the following description will be directed to a pipe system comprising at least two pipes and to the cleaning of a material. However it should be clear that the present system may also comprise the use of a single pipe and other contaminated materials may be cleaned as well. The disclosure is not limited to any specific organization of the pipe system, as long as the pipe system allows 1) for the heated fluid to be transferred to the contaminated soil and 2) for the collection of the created contaminated vapor in said soil and the transfer thereof to the destruction means as described herein. In a preferred embodiment, the pipe system comprises two or more concentric pipes. A non limiting example of a suitable pipe system can be found in WO 2005/120737, which is hereby incorporated by reference in its entirety.

The pipe system is in communication with a heat source that circulates a heated fluid through the pipes. The pipe system comprises a main pipe (which may be perforated or non-perforated) and a perforated pipe. The method comprises the steps of placing the pipe system in the contaminated material, circulating a heated fluid through the main pipe and optionally though the perforated pipe, thereby elevating the temperature of the surrounding material to a temperature sufficient to cause vaporization of contaminants; dragging the vaporized contaminants from the material into the perforated pipes; and treating or destroying the vaporized contaminants to remove the contaminants. The contaminants are drawn to the pipes by imposing a negative pressure in the perforated pipe, e.g. by connecting the pipe system to a vacuum system.

In a preferred embodiment, the vaporized contaminants coming from the material may be intermixed with the heated fluid in the pipe system for further treatment. Intermixture with the heated fluid improves the removal of the vaporized contaminants out of the material: the contaminants are entrained in the flow of heated fluid and transported out of the material. The present method is also in particular characterized in that the energy which is obtained by oxidation of the vaporized contaminants is at least partly recuperated and re-used. In particular, the present method comprises a nearly closed loop system wherein the energy which is obtained by destructing the material contaminants is at least partly re-used for heating the fluid that is sent through the pipe system for conductively heating the contaminated material. Incineration gasses resulting from the incineration of the contaminant vapor e.g. using a second oxidation catalyst, may also convert their energy trough an heat exchanger system which will recover the energy to warm fresh air necessary to compensate exhausts. A part of the incineration gasses may be removed from the nearly closed loop system.

The pipes of the pipe system may be arranged in a pattern in the contaminated material so as to achieve the most uniform heating throughout the pattern. A regular pattern of pipes can be used, such as triangular, square, rectangular, hexagonal etc., chosen to substantially cover the contaminated area. Triangular patterns are preferred since they provide the best thermal efficiency and, in practice, are easy to locate on the soil surface or in a soil heap. The temperature in the material is raised by circulating a heated fluid through the pipes. A thermal front moves away from the pipes into the surrounding material by thermal conduction, thereby vaporizing water and contaminants in the surrounding material. The superposition of the heat flow from all the pipes, results in a more uniform rise in temperature within the pattern.

It will be clear that the number of pipes applied in the material, the spacing, the relative position of pipes, the distance between the base and the pipes and the distance between the pipes and the lateral sides of a material may be varied in function of the contamination degree and/or the time desired to complete the process and/or the type of material and/or economic considerations. In another preferred embodiment, the distance between two adjacent pipes is comprised between 0.5 and 2 m, and preferably between 0.7 and 1.5 m.

The pipe system preferably comprises pipes made of a heat-resistant material such as but not limited to steel, metal, or ceramics. The pipes may be of any desired cross sectional shape, including, but not limited to, triangular, rectangular, square, hexagonal, ellipsoidal, round, or ovate. Preferably, the pipes have a substantially ellipsoidal, round, or ovate cross sectional shape. In a particularly preferred embodiment, the pipes have a substantially round cross-sectional shape and have a diameter which is comprised between 50 and 200 mm and preferably between 70 and 180 mm. The pipes preferably have a length comprises between 1 and 30 m meter, and preferably between 2 and 18 m.

In an embodiment, the pipes may be formed with a variable cross sectional area, so that greater heat dissipation occurs at certain portions of the pipes (sections having a smaller cross sectional area) than at other portions of the pipes. A local high heat dissipation section of the pipe may be positioned adjacent to material that requires extra heat dissipation, such as wet material or sections of material adjacent to the top and bottom of the pipe. Areas adjacent to the top and bottom of a pipe may need extra heating to counteract end loss heat effects. Selected portions of a pipe may be formed with sections that have a large cross sectional area. Large cross sectional area sections of a pipe may be placed adjacent to an overburden and/or uncontaminated material layers.

In another embodiment, pipes having different diameters may be introduced in a contaminated material. For instance a first layer of pipes may have a diameter that is larger than the diameter of pipes in a second layer. Ideally, the larger diameter pipes are at the bottom of the material stack to generate greater heat conductivity at the base of the material.

In another embodiment, one or more pipes may also be introduced substantially vertically into a contaminated material. However, according to other embodiments, the pipe may be positioned at any desired orientation from 0° (horizontal) to 90° (vertical) relative to ground surface. For example, in a soil remediation system embodiment, a pipe may be oriented at about 45° to remediate soil adjacent to a geological layer that slopes at about 45°. The orientation may be chosen to result in relatively low cost, quick and efficient soil remediation. The pipes may also be placed in soil so that a portion of the pipe is below contaminated soil, and a portion of the pipe is above the contaminated soil.

Heating a section of uncontaminated soil below the contaminated soil may prevent a drop in temperature at the interface. The cross sectional area of the pipe adjacent to contamination interfaces may be small, or may be made of a different material, so that more heat is diffused into the material adjacent to the interfaces. Diffusing more heat adjacent to the interfaces may promote a more uniform temperature distribution throughout the contaminated material.

The pipes may be drilled in the contaminated soil to depths that extend slightly below the contaminated zone. Alternatively, the pipes may be driven into the soil by conventional pile driving techniques such as hammers or ultrasonic devices. The pipes are not necessarily fixed or cemented in and therefore can be removed and reused after the remediation process is completed. Depending on the geometry of the contaminated zone, the perforated pipe need not be vertical but could be directionally placed or drilled horizontally, or the perforated pipe could comprise a combination of vertical and horizontal sections. Alternatively, the perforated pipe could be straight sections drilled at an inclined angle.

It will be clear to the person of skill in the art that the number of pipes may vary depending on their dimensions and the amount, situation and condition of the material to be cleaned from contaminants.

The perforations in a perforated pipe may be, but are not limited to, holes and/or slots. Preferably, between 1 % and 50% of the surface of a perforated pipe is provided with holes and/or slots. It is particularly preferred that a large amount of small perforations are provided on the perforated pipe. The perforated pipe may have several perforated zones at different positions along the length of the pipe. When the pipes are inserted into the soil, the perforated zones may be located adjacent to contaminated layers of soil. Alternatively the perforations may be provided along the complete length of the pipes.

In a particular embodiment, a network of pipes can be used in order to enhance vapor collection on particular places while keeping soil warm on the entire area.

The pipe system is heated by sending and circulating a heated gas or fluid such as high temperature air and/or gas through one or more pipes of the pipe system. Preferably, the high temperature air/gas is heated to a temperature comprised between 300 and 850°C, and more preferably comprised between 500 and 800°C. Extremely high temperature can also be employed mainly depending on the temperature limitations of the perforated pipes. Thus, in cases where perforated pipes are used which can withstand extremely high temperatures, i.e., from 1000 up to 1500 °C a corresponding extremely high temperature air/gas supply can be employed. The heat is transferred to the material by thermal conduction and progressively elevates the material temperature. A small amount of heat will also be transferred to the material by means of radiation. The elevated material temperature causes the contaminants located within the contaminated material to volatilize thereby producing a contaminated vapor.

According to the present disclosure, the material is heated by conductive heating, which is particularly advantageous because temperatures obtainable by such heating are not limited by the amount of water present in the material and not by the porosity of the material. Material temperatures substantially above the boiling point of water may be obtained using thermal conductive heating. Material temperatures of at least about 100°C, 125°C, 150°C, 200°C, 250°C, 300°C, 400°C, 500°C or greater may be obtained using thermal conductive heating.

In yet another preferred embodiment, the present disclosure relates to a method which comprises regulating the flow direction of said heated fluid in said material. For that, an additional pipe system may be provided in connection with the pipes for adapting the flow direction of the heated fluid in the perforated pipes. Sections of material adjacent to the inlet of the pipes may undergo extra heating compared to section of material adjacent to the end of the pipes. In order to counteract these end loss heat effects the present system may provide means for at least temporarily adapting and in particular for at least temporarily reversing the flow of heated fluid through the pipes. Thereby, sections of material adjacent to the end of the pipes are temporarily provided with extra heat. As a consequence, a more uniform conduction of heat throughout the complete section of treated material is obtained. For that, the present system may provide an extra pipe system comprising preferably at least two intercrossing tubes of which the ends are provided with regulating valves. By adapting the position of the valves, the heated fluid may flow in clockwise or in counterclockwise direction throughout the system of pipes.

The present disclosure concerns a nearly closed loop system which makes use of a vacuum to draw contaminant gasses out of a heated material, such as a heated soil. A vacuum system is connected to the pipes for putting the pipes under negative pressure. The vacuum system should be capable of pulling a vacuum appropriate for the particular combination of material permeability and perforated pipes within a treatment system. The vacuum system may be able to pull a vacuum in the range of 50 Pa to 10000 Pa, alternatively in a range from 50 Pa to 5000 Pa. The vacuum system may comprise a ventilator, a fan or a water sealed pump.

The heated fluid which is sent through the pipe system is preferably not be injected in the material. In configurations whereby the heated fluid passes through a perforated pipe, an imposed pressure difference in the material may retain it in the pipe system. Consequently, there will be no intermixture of the heated fluid with the contaminant vapor *in* the material and the formation of vapor flow paths in the material is minimized. Unlike fluid injection in the material, conductive heating will be very uniform in its vertical and horizontal sweep and will result in a homogenous dispersion of heat through the material. This is because the heat energy injected into the material by the pipes is uniform over each pipe. Furthermore, conductive heating creates permeability as a result of drying and shrinking of the superheated material (i.e. above 100°C) that develops around each pipe. Closely spaced vapor flow paths are created even in tight silt and clay layers.

By putting the perforated pipes under negative pressure vaporized contaminants are drawn from the material into the pipe system. The contaminated vapors do not move through the material to the top of the material but rather into the perforated pipes and down the pipes into a further off-gas treatment unit. Some vapors however may move to the material surface into a vapor hold chamber which is formed in between the material and a covering, applied on top of the material surface.

The vacuum is maintained throughout the period of heating and for a sufficient time after heating to avoid contaminant losses or dispersion.

The vapor pressure of the contaminant increases significantly with temperature. Heating soil from the ambient temperature to 100°C increases more than ten-fold the vapour pressure of the contaminant and improves the mass transfer of liquid to gas.

The vacuum created in the soil promotes the movement of vapors toward the perforated pipes and pushes liquid contaminant to produce vapors.

The vacuum will lower the vapor pressure of the water in the material and cause boiling to occur at a lower temperature than the normal boiling point at atmospheric pressure. At the same time, the high boiling point contaminants will be removed by steam distillation in the presence of water vapor at a temperature well below the normal boiling point of the contaminants. This will occur for all contaminants that are nearly immiscible in water, since the boiling point of the mixture of two immiscible fluids will always be less than the boiling point of either component by itself.

In the perforated pipes, the vaporized contaminants will be intermixed with the heated fluid circulating through the pipes. Advantageously, intermixture of heated fluid with vaporized contaminants will not only favor the transport of the vaporized contaminants out of the material to an off-gas treatment unit, such as an oxidizer, as hereinafter described.

Advantageously, an increased material temperature, the imposed vacuum and intermixture with a heated fluid at least partly initiates incineration of the material contaminants *in situ.* The material contaminants in the contaminant vapor may at least partly ignite and automatically flare up already in the material.

In a preferred embodiment of soil decontamination, the surface of the soil is covered by an insulation sheet. Creating a vacuum below the sheet may cause the sheet to be sucked to the surface but in any case will reduce the amount of air/gas that is being pulled into the pipe system from the atmosphere. Thus, substantially only air, soil moisture, and contaminants in the soil will be evacuated by the perforated pipes embedded in the soil.

By pulling moisture and contaminants toward the pipes, the risk of spreading the contaminants can be dramatically reduced. The insulation sheet also allows reducing heat losses. An insulation sheet may also be provided underneath the soil heap to be treated in order to reduce heat losses to the underlying soil.

When the contaminated vapor is removed from the soil, the moisture level in the contaminated soil can be substantially reduced, preferably to an average moisture level of less than about 5% by weight, more preferably to an average moisture level of less than about 2% by weight, and most preferably to an average moisture level of less than about 1% by weight.

Material contaminants are removed from the material by a combination of vaporization, in situ thermal decomposition and oxidation in a catalyst system. The perforated pipes and the nearby material are extremely hot and most contaminants drawn into the perforated pipes will decompose with a residence time in the order of seconds.

In another preferred embodiment the present system comprises a fluid introduction pipe that transports a heated fluid to the system of on ore more perforated pipes in the material. In a preferred embodiment, the disclosure also comprises supply pipes for connecting the perforated pipes introduced in the material with the main pipe. These supply pipes preferably are flexible pipes.

In an embodiment, the present system also comprises a vapor collection pipe system that transports the heated fluid together with vaporized contaminants out of the material back to the catalyst system feeding the pipe and a smaller part to a further treatment means. In addition, and in case of multi-pipe systems, the disclosure preferably also comprises supply pipes for connecting the perforated pipes introduced in the material with the vapor collection pipes. The collection pipe system is in connection with the system of perforated pipes embedded in the material and may be coupled to a vacuum system. In an embodiment, the pipe system may comprise un-heated pipes and/or uninsulated pipes and/or un-perforated pipes. Vapor containing vaporized contaminants produced in the material may initially rise vertically and then travel downwardly to a treatment facility (e.g. catalyst). In alternate embodiments, the pipe system is thermally insulated and heated. An insulated and heated pipe system inhibits condensation of contaminant vapor within the pipe system.

Part of the heated fluid and the contaminant vapor streams not returned back to the catalyst system before the pipe may be processed by a treatment means to reduce contaminants within the streams to acceptable levels. The treatment means may comprise a mass transfer system such as activated carbon bed, catalyst or a reactor system such as a thermal oxidizer, or a combination thereof. Preferably the treatment means is a catalyst.

In a particularly preferred embodiment, the heated fluid and the contaminant vapor stream is at least partly brought back to the catalyst system before the treatment pipe and the heat energy which is obtained by oxidizing the material contaminants in the catalyst is at least partly recuperated and re-used, in particular for heating the fluid which is to be sent through the perforated pipes. The present disclosure thus provides an energy-efficient method for cleaning contaminant materials: in particular the present method comprises a nearly closed system wherein at least a part of the energy for heating a fluid is provided by the oxydation of material contaminants. In another particularly preferred embodiment, the heated fluid and the treated vapor in the oxidizer are re-used for circulating through the pipes. For that, these are preferably collected at the exit of the fan (not displayed), and drawn to the catalyst before the entrance of the perforated pipes. Thus, the injected hot air/gas is routed through the loop and returns to the catalyst for reheating and re-injection into the material. In particular, the present disclosure also comprises a pipe system for at least partly re-circulating the treated contaminant vapor. A part of the gasses may be removed from the system, e.g. via an exhaust pipe on a collector. The energy contained in the removed gases can then be recovered trough a heat exchanger system in order to warm up the added air necessary to balance the loop.

The catalyst can be a metal, metal oxide, or other type of catalyst that enhances pyrrolysis or oxidation of contaminants. In a preferred embodiment the metal is a precious metal. By the term "precious metal" it is meant a rare, naturally occurring metallic element of high economic value. Especially preferred precious metals for use in the disclosure are precious metals from the platinum group metals: ruthenium, rhodium, palladium, iridium and platinum. Especially preferred are platinum.

The central element of the system according to an embodiment of the disclosure is a catalyst in the form of a solid.

In a preferred embodiment, the precious metal is supported on a support material, preferably the support material is made of metal, more preferably the support material is alumina or steel. In an embodiment, the catalyst comprises a stainless steel support material that is covered with precious metals such as platinum.

The support material can take different forms such as a granular bed or a honeycomb monolith. The catalyst support material is covered with the precious metal to form a catalyst for use in the disclosure.

As used herein, the term "monolith" refers to a block comprising a large number of small straight and parallel channels. On the walls of the channels a catalytically active layer can be applied in which chemical reactions can take place. Because of the large number of channels, the contact area between catalytic layer and the fluid that travels inside the channels is very large. Further, the channels are straight and parallel so that the flow of fluid is not obstructed and the pressure drop across a monolith is low.

In a more preferred embodiment, the catalyst system comprises a precious metal supported on alumina or steel, preferably in the form of a granular bed or a monolith, for example a honeycomb monolith.

The catalytic set-up in a system according to an embodiment of the disclosure reduces the oxidation temperature of a fuel, such as propane, from over 1900°C to below 900°C. Such combustion at considerably reduced temperature compared to the prior art, is described as "cold combustion". The above described "cold combustion" does not result in flame formation and, thanks to the low combustion temperature; the heat can be utilized efficiently. Local overheating phenomena do not occur. The only reaction products produced have very low molecular weight, such as water vapor and carbon dioxide - no pollutants such as nitrous oxides, carbon monoxide, are released. A more environmentally friendly system compared to classic combustion is provided.

In a particularly preferred embodiment, the present disclosure relates to a system which comprises starting up the thermal breakdown of contaminants by pre-heating of the catalyst to a temperature required for the catalyst to activate. This temperature is preferably between 200°C and 450°C, more preferably between 250°C and 350 °C. The resistance heater is used just to heat the catalyst to this activation temperature of the catalyst (lights-off temperature). The heat of reactions released, off the surface of the catalyst, leads to an increase in the temperature inside the chamber. When steady state temperature is established along the catalyst, the resistance heater is no longer needed. The resistance heater may be turned off.

In a preferred embodiment of the disclosure , the temperature of a catalyst is raised to this temperature by providing a resistance heater element in close proximity to the catalyst. Passing an electric current through the resistance - a coil, wire, tubular heating element or any other obstacle which impedes current, will cause it to give off heat. Heaters of this kind have an inherent efficiency of 100% in converting electric energy to heat. This type of heating can be precisely controlled to allow a uniformity of temperature within narrow limits. It is cleaner than other methods of heating because it does not involve any combustion. It can be protected from overloading by automatic breakers. It is quick to use and to adjust. It is relatively quiet.

In another embodiment of the system of the disclosure , said resistance heater element is a carrier for said catalyst; preferably said resistance heater element is provided in the form of a coil, a wire, or a tubular heater element.

In a particularly preferred embodiment the present disclosure provides a system for cleaning a material containing contaminants comprising:
- means for transferring heat to said material to a temperature sufficient to cause vaporization of said material contaminants thereby obtaining a contaminant vapor said means comprising at least one heat-conductive pipe which is, in working condition, under negative pressure, and which comprises a perforated outer pipe which is provided with a non perforated inner pipe of a smaller diameter such that a space is created between the inner and the outer pipe,
- means for forcing said contaminant vapor out of said material into said heat-conductive pipe comprising a vacuum system that is in connection with said heat-conductive pipe,
- first means for destructing said contaminant vapor to at least partly remove contaminants from said material in connection with said heat-conductive pipe and said vacuum system thereby providing heat energy,
- means for re-using the heat energy obtained by destructing said contaminant vapor for heating said material in order to vaporize the remaining contaminants in said material, characterized in that said first means for destructing said contaminant vapor comprises a catalyst and a resistance heater element for raising the temperature of said catalyst to a temperature sufficient for destructing said contaminant vapor, and
- means for recovering energy out of potential exhaust gasses and transfer that energy to fresh air used to replace the exhaust.

In another embodiment of the system of the disclosure , said means for forcing said contaminant vapor out of said material comprises a fan with an adjustable speed of rotation.

In another embodiment of the system of the disclosure , a second means for destructing said contaminant vapor is provided, connected to said means for transferring heat to said material and said vacuum system such that said vacuum system is positioned in between said first and said second means for destructing said contaminant vapor. The second means for destructing said contaminant vapor is preferentially located in a separate loop. In an embodiment of the disclosure , the second means for destructing said contaminant vapor is located before the vacuum system. In an embodiment of the disclosure , the second means for destructing said contaminant vapor is located after the vacuum system.

In another embodiment of the system of the disclosure , said second means for destructing said contaminant vapor comprises a catalyst and a resistance heater element for raising the temperature of said catalyst to a temperature sufficient for destructing said contaminant vapor.
In a second aspect, the disclosure provides use of a system according to an embodiment of the disclosure for removing any volatile or semi-volatile contaminants, such as oil, oil-like or organic contaminants, from soils, steel cuttings or mineral tailings.
In a third aspect, the disclosure provides a method for cleaning a material containing contaminants comprising the steps of:
a) providing a system according to an embodiment of the disclosure ,
b) optionally, sending a flow of electric current through the first resistance heater element to raise the temperature of the vapor to between 250°C and 350°C, preferably between 250 °C and 400°C,
c) optionally, interrupting the flow of electric current,
d) leading a composition comprising a fuel and oxygen over the first catalyst for combustion, thereby raising said temperature further to a pre-determined temperature T1 and providing a heated fluid of said temperature T1 sufficient to cause vaporization of the contaminants present in said material,
e) optionally, interrupting the lead of fuel and oxygen when an adequate temperature has been reached,
f) transferring said heated fluid to the pipe system and forcing the contaminant vapor out of the material into the one or more perforated pipes to obtain a flow of the contaminant vapor from the material in the system,
g) optionally, venting at least part of the flow of the contaminant vapor from the system,
h) transferring the flow of the contaminant vapor to the first means for destructing the contaminant vapor,
i) in said first means for destructing the contaminant vapor, leading the flow of the contaminant vapor over the first means for incineration of the contaminant vapor thereby removing at least part of the contaminants from the contaminant vapor and providing heat energy,
j) transferring the flow of contaminant vapor obtained from the contaminated material to a second means for destructing the contaminant vapor prior to venting the flow of the contaminant vapor from the system, thereby removing at least part of the contaminants from the contaminant vapor,
k) using the heat energy obtained in step j) for heating the material containing contaminants to vaporize the remaining contaminants in the material, thereby obtaining a decontaminated material.
In another embodiment, the disclosure provides a method for cleaning a material containing contaminants, preferably volatile or semi-volatile contaminants comprising the steps of:
- providing a system according to an embodiment of the disclosure ,
- sending a flow of electric current through said resistance heater element to raise the temperature of said catalyst to a temperature between 250 °C to 350 °C,
- interrupting said flow of electric current,
- leading a composition comprising a fuel and oxygen over said first catalyst for combustion thereby raising said temperature further to a pre-determined temperature T1 and providing a heated fluid of said temperature T1 sufficient to cause vaporization of said material contaminants present in said material,
- transferring the heated fluid to said heat-conductive pipe,
- starting up the means for forcing said contaminant vapor out of the material into said heat-conductive pipe to obtain a flow of said contaminant vapor from the material in the system,
- optionally venting at least part of said flow of said contaminant vapor from the system,
- transferring said flow of said contaminant vapor to said first means,
- in said first means leading said flow of said contaminant vapor over the heated catalyst for incineration of the contaminant vapor thereby removing at least part of the contaminants from the contaminant vapor and providing heat energy,
- using said heat energy obtained by destructing the contaminant vapor for heating the material containing contaminants to vaporize the remaining contaminants in the material thereby providing a decontaminated material.
In an embodiment of the disclosure , the method additionally comprises the step of transferring said flow of said contaminant vapor obtained from said contaminated material to a second means for destructing said contaminant vapor prior to venting the flow of said contaminant vapor from the system, thereby removing at least part of the contaminants from the contaminant vapor.

In an embodiment of the disclosure , the method comprises the step of: transferring said flow of said contaminant vapor obtained from said contaminated material to a second means for destructing said contaminant vapor prior to venting said flow of said contaminant vapor from said system, thereby removing at least part of said contaminants from said contaminant vapor.

In an embodiment of the disclosure , the method further comprises the step of: transferring said flow of said contaminant vapor obtained from said contaminated material to a second means for destructing said contaminant prior to first mean for destruction said contaminants from said system, thereby removing at least part of said contaminants from said contaminant vapor and recovering energy from said contaminants by heat exchanging system.
In an embodiment of the method of the disclosure , said means for destructing said contaminant vapor at least part of said contaminants is removed from said contaminant vapor by catalytic oxidation.

In an embodiment of the method of the disclosure , said catalytic oxidation is executed by leading said flow of said contaminant vapor over a catalyst comprising a metal or metal oxide, preferably said catalyst comprises alumina.

The foregoing and other objects, features and advantages of the disclosure will become more readily apparent from the following detailed description of preferred embodiments which proceed with reference to the accompanying drawings.

In a particularly preferred embodiment, the system of the disclosure is used for the treatment of contaminated soil, preferably for removal of oil from soil.

The present system is designed to allow treatment of soil of 1 to 10000 m³ in volume. The entire system can be loaded upon a trailer to be transported from site to site.

In a particularly preferred embodiment, the system of the disclosure is used for the removal of oil from steel cuttings or mineral tailings.

### Example 1

The following example illustrates the cleaning of an oil-contaminated soil using a system and method according to an embodiment of the disclosure . This example does not limit to the scope of the disclosure , which is defined by the claims.

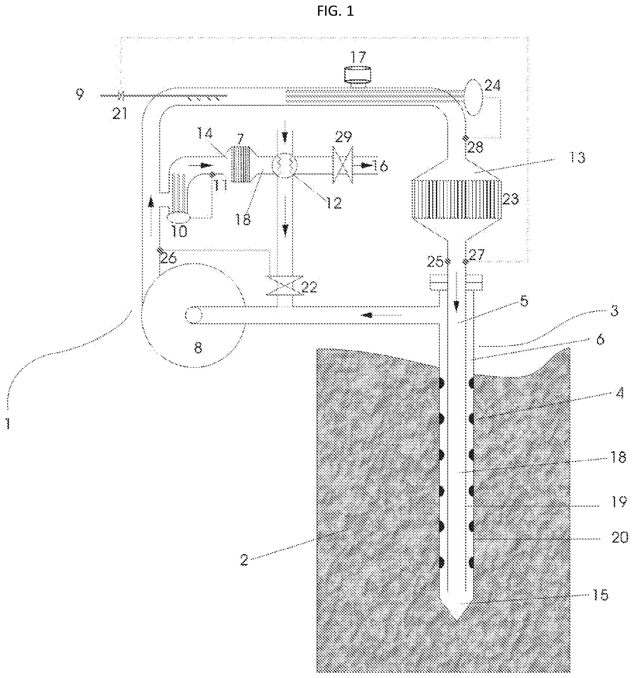

Referring to Figure 1 a nearly closed loop system 1 is provided comprising a vacuum system 8, which comprises a fan, means for regulating the frequency of the fan (not displayed), a first catalyst 23 and a second catalyst 7, two valves 21, 22, a fuel introduction conduit 9, a safety valve 17, a first resistance heater element 24 and a second resistance heater element 10, three temperature probes or thermocouples 11, 27, 28, a pressure probe 25, a heat exchanger 12 and an oxygen measurement device 26.

Referring to Figure 1 an embodiment of the method of the disclosure may be as follows. Both catalysts 7, 23 are heated to a temperature between 250 and 350 °C by sending an electric current to the thermal resistance elements 10, 24 placed just before the treatment chambers 13, 14, which chambers may act as a first and second means for destructing the contaminant vapour. Upon reaching the desired temperature, the electric current is cut. A temperature T1 is set. A pressure P is set. The vacuum system comprising the fan 8 is operated at a frequency between 10 Hz to 60 Hz. A fuel valve 21 is opened and the temperature in the treatment chambers 13 and 14 is progressively increased. The frequency of the fan is increased by switching the means for regulating the frequency of the fan to a maximum speed of fan rotations. The maximum speed of fan rotation may be between 25 to 3500 rotations per minute (rpm).

Fuel is injected into the loop system 1 through the fuel introduction conduit 9 which intersects the loop system 1 close heater element 24 and fuel valve 21. The fuel is circulated in the substantially closed loop. The fuel is mixed with air. The mixture is sent to the first chamber 13 for combustion. The chamber 13 is provided with a catalyst, typically an oxidation catalyst 23. The catalyst is pre-heated, typically to its activation temperature, typically to a temperature between 250 and 350 °C. The pre-heating is preferably obtained by a resistance element. Upon reaching the activation temperature, the catalyst will catalyze the treatment of the vapours carrying contaminants present inside the chamber. This will lead to a further increase in temperature inside the chamber. When steady state temperature is established along the catalyst, the resistance heater is no longer needed and it can be turned off. Pre-heating of the catalyst by means of a resistance element facilitates the initiation of the fuel combustion process.

A heated fluid is produced. Combustion of the fuel and oxygen will increase the temperature above the initial temperature of the catalyst, hence above 250 °C; preferably above 350 °C. The temperature of the fluid in the chamber will be increased to a temperature which has previously been determined as suitable for volatilizing the targeted contaminants for the material to be cleaned. Typically this temperature is in the range between 500 and 750 °C. The chamber is provided with a pressure sensor 25 which allows pressure control through an exhaust valve 29 at exhaust 16. The pressure may range from 0 to 10000 Pa or from 0 to 3500 Pa depending on the size of the installation.

The fluid heated to the desired temperature for volatilization of targeted contaminants is transferred to the means for transferring heat to the contaminated material 2. In this example the contaminated material is a contaminated soil 2. The nearly closed loop system is provided with one or more pipes applied in situ to the soil for the purpose of transferring heat to the soil.

The pipe system 3 comprises a perforated 4 outer pipe 20 which is provided with a non perforated inner main pipe 19. The outer pipe 20 may be locked off at its lower side by a tip 15. Inside the perforated outer pipe 20, a non perforated inner pipe 19 has a diameter which is smaller than the outer pipe diameter such that a space is created in between the inner 19 and the outer pipe 20. The end of the inner pipe 19 is open. The main pipe 19 also acts as a fluid introduction pipe 5 that sends a heated fluid through the pipe system 3. The perforated pipe 20 acts as a vapour collection pipe 6 that transports contaminant vapour from the soil to the loop system. The pipe system 3, at least for space between inner and outer pipe, is put under negative pressure by connecting the pipe to a vacuum system 8.

The soil 2 is heated by thermal conduction by circulating the heated fluid through the pipe system 3.

In an embodiment, heated fluid is sent through the main pipe 19. The heated fluid is forced through the open end of the main pipe 19 to the space in between the main pipe 19 and the perforated pipe 20. Due to the imposed vacuum, this fluid will not be injected in the soil 2 through the pipe perforations 4 of the perforated pipe 20 but will remain in the pipe 3. The heated fluid is not intermixed with the contaminant vapour in the soil. By putting the pipe 3 under negative pressure vaporized contaminants are drawn from the soil into the pipe 3, and in particular into the space in between the main 19 and the perforated pipe 20, where they are intermixed with the heated fluid and drawn out of the pipe system 3 together with the heated fluid.

Alternatively (not shown) heated fluid can also be introduced in the pipe system 3 through the space in between perforated 20 and main pipe 19. Contaminants and the heated fluid may then be forced via the main pipe 19 back up to the soil surface and out of the soil.

A contaminant vapour is extracted out of the soil by creating a difference in pressure in the soil. The pressure difference is obtained by imposing a vacuum to the soil for reducing pressure in the soil and for withdrawing contaminants from the contaminated soil.

The contaminant vapour is led to the loop system. A vacuum system comprising a fan 8 provided in the system provides a flow of contaminant vapour.

The contaminant vapour is led to the above described chamber for treatment 13. There it is led over the oxidation catalyst 23 heated to a temperature suitable for catalytically oxidizing the contaminants in the flow of contaminant vapour. The destruction of the contaminants provides heat. Hence, fuel injections required to maintain the temperature of the heated fluid at a desired temperature may be reduced. The heat derived from the destruction of the contaminants is used for heating the soil and freeing it further from contaminants.

To provide a constant gas temperature at the entry of the pipe system 3, it was found to be beneficial to inject the fuel (liquid or gaseous) into the contaminant vapor of the loop system in close proximity to the catalyst. The level of oxygen in the gas flow may be controlled by opening of oxygen valve 22.
The substantially closed loop is intersected with a conduit provided with an exhaust. The conduit is provided with a second chamber and catalyst. A second catalytic treatment of the contaminant vapour takes place here prior to venting a gas flow to the atmosphere.
That removed air is thereby replaced by fresh air. In order to recover maximal energy from the system, a heat exchanger 12 is then placed on an exhaust tube 18 and warming therefore fresh air added.

The loop system is provided with an exhaust 16. The conduit connecting the exhaust 19 to the loop system 1 may be provided with a pressure valve.

After the soil is decontaminated, the material can be declared remediated and kept in place as is or, on ex-situ application, reused. It may be used as to refill an excavated area or as a road base.

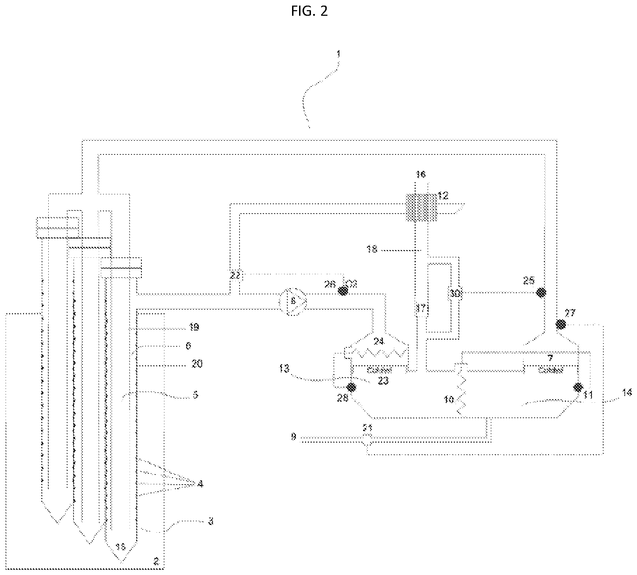

It will be evident to a person skilled in the art that a system according to the disclosure can be used with a plurality of heating tubes instead of just one, as depicted in Figure 2.

### Example 2

Steel cuttings are presented in the form of a mud for treatment. The pipes of the treatment system are inserted into a pile of the mud. The steel cuttings are cleaned using a system according to an embodiment of the disclosure.

## Claims

1. A nearly closed loop system (1) for cleaning a material (2) containing contaminants comprising:
- means for transferring heat to said material (2), the means comprising at least one pipe system (3) which comprises a perforated (4) pipe (20) and a main pipe (19) such that a space is created between the main pipe (19) and the perforated pipe (20), wherein at least one of the pipes (19,20) is heat-conductive,
- means for forcing a contaminant vapor, generated by heating and applying a pressure difference to the contaminated material (2) to a temperature adequate to cause vaporization of the contaminants, out of said material (2) into the pipe system (3), said means comprising a fan, vacuum or suction system (8) connected to the pipe system (3), and
- a first means (13) for destructing the contaminant vapor, said first means (13) comprising an inlet and an outlet, wherein said inlet is connected to the fan, vacuum or suction system (8) for receiving the contaminant vapor and wherein said outlet is connected to the pipe system (3) for transferring heat of the means (13) for destructing the contaminant vapor to the material (2), thereby providing a nearly closed loop;
**characterized in that** said first means (13) for destructing the contaminant vapor comprises a first oxidation catalyst (23) and/or a first resistance heater element (24), wherein the resistance heater element (24) and/or the oxidation catalyst are capable, alone or together, of raising the temperature of the contaminant vapor to a temperature sufficient for destructing said received contaminant vapor and **characterized in that** the nearly closed loop system (1) comprises a second means (14) for destructing the contaminant vapor comprising a second oxidation catalyst and a second resistance heater element for raising the temperature of the contaminant vapor to a temperature sufficient for destructing said contaminant vapor.

2. System according to claim 1, wherein said first oxidation catalyst (23) comprises a precious metal, preferably selected from rhodium, palladium or platinum.

3. System according to claim 1 or 2, wherein said first oxidation catalyst (23) is deposited on a carrier in the form of a granular bed or a monolith.

4. System according to any of the above claims 1 to 3, wherein said first resistance heater element in working condition is capable of raising the temperature of said oxidation catalyst to a temperature between 200°C and 400°C, preferably between 250°C and 350°C.

5. System according to any of claims 1 to 4, wherein said first resistance heater element (24) is provided in the form of a coil or a wire or a tubular heating element.

6. System according to any of claims 1 to 5, wherein the vacuum system (8) comprises a fan with an adjustable speed of rotation.

7. System according to any of claims 1 to 6, wherein the second means (14) for destructing the contaminant vapor is connected to the vacuum system (8), such that the vacuum system (8) is positioned in between said first (13) and said second means (14) for destructing the contaminant vapor.

8. System according to any of claims 1 to 7, further comprising means for recovering energy out of potential exhaust gasses and for transferring that energy to fresh air that is used to replace the exhaust.

9. System according to claim 8, wherein the means for recovering energy and for transferring energy comprises a heat exchanger.

10. Use of a nearly closed loop system (1) according to any one of claims 1 to 9, for removing any volatile or semi-volatile contaminants, such as oil, oil-like or organic contaminants, from soils, steel cuttings or mineral tailings.

11. Method for cleaning a material (2) containing contaminants comprising the steps of:
a) providing a system according to any of claims 1 to 9,
b) optionally, sending a flow of electric current through the first resistance heater element (24) to raise the temperature of the vapor to between 200°C and 400°C, preferably between 250°C and 350°C,
c) optionally, interrupting the flow of electric current,
d) leading a composition comprising a fuel and oxygen over the first catalyst (23) for combustion, thereby raising said temperature further to a pre-determined temperature T1 and providing a heated fluid of said temperature T1 sufficient to cause vaporization of the contaminants present in said material (2),
e) optionally, interrupting the lead of fuel and oxygen when an adequate temperature has been reached,
f) transferring said heated fluid to the pipe system (3) and forcing the contaminant vapor out of the material into one or more perforated pipes (20) to obtain a flow of the contaminant vapor from the material (2) in the system (1),
g) optionally, venting at least part of the flow of the contaminant vapor from the system (1),
h) transferring the flow of the contaminant vapor to the first means (13) for destructing the contaminant vapor,
i) in said first means (13) for destructing the contaminant vapor, leading the flow of the contaminant vapor over the first means for incineration of the contaminant vapor thereby removing at least part of the contaminants from the contaminant vapor and providing heat energy,
j) transferring the flow of contaminant vapor obtained from the contaminated material (2) to a second means (14) for destructing the contaminant vapor prior to venting the flow of the contaminant vapor from the system (1), thereby removing at least part of the contaminants from the contaminant vapor,
k) using the heat energy obtained in step j) for heating the heated fluid that is circulated through the pipe system in order to heat the material containing contaminants to vaporize the remaining contaminants in the material, thereby obtaining a decontaminated material.

12. Method according to claim 11, wherein the material (2) is selected from the group consisting of: soils, steel cuttings or mineral tailings, preferably contaminated with any volatile or semi-volatile contaminants. Such as oil, oil-like or other organic contaminants.

13. Method according to claim 11 or 12, wherein in said means (14) for destructing the contaminant vapor, at least part of said contaminants is removed from said contaminant vapor by resistance heating and catalytic oxidation.

14. Method according to claim 13, wherein said catalytic oxidation is executed by leading the flow of the contaminant vapor over a first oxidation catalyst (23) comprising a metal or metal oxide, wherein said first oxidation catalyst (23) comprises a precious metal, preferably selected from rhodium, palladium or platinum.

## Patentansprüche

1. System mit beinahe geschlossener Schleife (1) zum Reinigen von Material (2), das Kontaminanten enthält, umfassend:
- Mittel zum Übertragen von Wärme auf das Material (2), wobei die Mittel mindestens ein Rohrsystem (3) umfassen, das ein perforiertes (4) Rohr (20) und ein Hauptrohr (19) umfasst, derart dass ein Raum zwischen dem Hauptrohr (19) und dem perforierten Rohr (20) ausgebildet ist, wobei mindestens eines der Rohre (19,20) wärmeleitend ist,
- Mittel zum Absaugen eines Kontaminantendampfes, der durch Erwärmen des kontaminierten Materials (2) auf eine zum Bewirken von Verdampfung der Kontaminanten geeigneten Temperatur und Anwenden eines Druckunterschieds auf dasselbe erzeugt wird, aus dem Material (2) in das Rohrsystem (3), wobei die Mittel ein Gebläse-, Vakuum- oder Saugsystem (8) umfassen, das mit dem Rohrsystem (3) verbunden ist, und
- ein erstes Mittel (13) zum Vernichten des Kontaminantendampfes, wobei das erste Mittel (13) einen Einlass und einen Auslass umfasst, wobei der Einlass mit dem Gebläse-, Vakuum- oder Saugsystem (8) zum Empfangen des Kontaminantendampfes verbunden ist, und wobei der Auslass mit dem Rohrsystem (3) zum Übertragen von Wärme des Mittels (13) zum Vernichten des Kontaminantendampfes auf das Material (2) verbunden ist, um dadurch eine beinahe geschlossene Schleife bereitzustellen;
**dadurch gekennzeichnet, dass** das erste Mittel (13) zum Vernichten des Kontaminantendampfes einen ersten Oxidationskatalysator (23) und/oder ein erstes Widerstandsheizelement (24) umfasst, wobei das Widerstandsheizelement (24) und/oder der Oxidationskatalysator allein oder zusammen zum Erhöhen der Temperatur des Kontaminantendampfes auf eine zum Vernichten des empfangenen Kontaminantendampfes ausreichende Temperatur imstande sind, und **dadurch gekennzeichnet, dass** das System mit beinahe geschlossener Schleife (1) ein zweites Mittel (14) zum Vernichten des Kontaminantendampfes umfasst, das einen zweiten Oxidationskatalysator und ein zweites Widerstandsheizelements zum Erhöhen der Temperatur des Kontaminantendampfes auf eine zum Vernichten des Kontaminantendampfes ausreichende Temperatur umfasst.

2. System nach Anspruch 1, wobei der erste Oxidationskatalysator (23) ein Edelmetall umfasst, das vorzugsweise aus Rhodium, Palladium oder Platin ausgewählt ist.

3. System nach Anspruch 1 oder 2, wobei der erste Oxidationskatalysator (23) in Form einer körnigen Bettung oder eines Monolithen auf einen Träger aufgebracht ist.

4. System nach einem der vorhergehenden Ansprüche 1 bis 3, wobei das erste Widerstandsheizelement im Betriebszustand zum Erhöhen der Temperatur des Oxidationskatalysators auf eine Temperatur zwischen 200 °C und 400 °C, vorzugsweise zwischen 250 °C und 350 °C imstande ist.

5. System nach einem der Ansprüche 1 bis 4, wobei das erste Widerstandsheizelement (24) in Form einer Spule oder eines Drahtes oder eines rohrförmigen Heizelements vorgesehen ist.

6. System nach einem der Ansprüche 1 bis 5, wobei das Vakuumsystem (8) ein Gebläse mit einer einstellbaren Drehzahl umfasst.

7. System nach einem der Ansprüche 1 bis 6, wobei das zweite Mittel (14) zum Vernichten des Kontaminantendampfes derart mit dem Vakuumsystem (8) verbunden ist, dass das Vakuumsystem (8) zwischen den ersten (13) und dem zweiten Mittel (14) zum Vernichten des Kontaminantendampfes positioniert ist.

8. System nach einem der Ansprüche 1 bis 7, ferner umfassend Mittel zum Rückgewinnen von Energie aus potenziellen Abgasen und zum Übertragen dieser Energie auf frische Luft, die zum Ersetzen des Abgases verwendet wird.

9. System nach Anspruch 8, wobei das Mittel zum Rückgewinnen von Energie und zum Übertragen von Energie einen Wärmetauscher umfasst.

10. Verwendung eines Systems mit beinahe geschlossener Schleife (1) nach einem der Ansprüche 1 bis 9 zur Entfernung von flüchtigen oder halbflüchtigen Kontaminanten, wie beispielsweise Öl, ölartigen oder organischen Kontaminanten, aus Erdreich, Stahlspänen oder mineralischen Abgängen.

11. Verfahren zur Reinigung eines Materials (2), das Kontaminanten enthält, umfassend die folgenden Schritte:
a) Bereitstellen eines Systems nach einem der Ansprüche 1 bis 9,
b) gegebenenfalls Senden eines Flusses von elektrischem Strom durch das erste Widerstandsheizelement (24) zum Erhöhen der Temperatur des Dampfes auf 200 °C bis 400 °C, vorzugsweise 250 °C bis 350 °C,
c) gegebenenfalls Unterbrechen des Flusses von elektrischem Strom,
d) Zuführen einer Zusammensetzung, die einen Brennstoff und Sauerstoff umfasst, über den ersten Katalysator (23) zur Verbrennung, um dadurch die Temperatur auf eine vorbestimmte Temperatur T1 weiter zu erhöhen und ein erwärmtes Fluid der Temperatur T1 bereitzustellen, die ausreicht, um Verdampfung der im Material (2) vorhandenen Kontaminanten zu bewirken,
e) gegebenenfalls Unterbrechen der Zuführung von Brennstoff und Sauerstoff, wenn eine geeignete Temperatur erreicht wurde,
f) Überführen des erwärmten Fluids zum Rohrsystem (3) und Absaugen des Kontaminantendampfes aus dem Material in ein oder mehrere perforierte Rohre (20), um einen Strom des Kontaminantendampfes aus dem Material (2) im System (1) zu erhalten,
g) gegebenenfalls Ablassen wenigstens eines Teils des Stroms des Kontaminantendampfes aus dem System (1),
h) Überführen des Stroms des Kontaminantendampfes zum ersten Mittel (13) zum Vernichten des Kontaminantendampfes,
i) Zuführen des Stroms des Kontaminantendampfes im ersten Mittel (13) zum Vernichten des Kontaminantendampfes über das erste Mittel zur Verbrennung des Kontaminantendampfes, um dadurch wenigstens einen Teil der Kontaminanten aus dem Kontaminantendampf zu entfernen und Wärmeenergie bereitzustellen,
j) Überführen des Stroms von Kontaminantendampf, der aus dem kontaminierten Material (2) erhalten wird, zu einem zweiten Mittel (14) zum Vernichten des Kontaminantendampfes vor dem Ablassen des Stroms des Kontaminantendampfes aus dem System (1), um dadurch wenigstens einen Teil der Kontaminanten aus dem Kontaminantendampf zu entfernen,
k) Verwenden der in Schritt j) erhaltenen Wärmeenergie zum Erwärmen des erwärmten Fluids, das durch das Rohrsystem zirkulieren gelassen wird, um das Material, das Kontaminanten enthält, zum Verdampfen der restlichen Kontaminanten im Material zu erwärmen, um dadurch ein dekontaminiertes Material zu erhalten.

12. Verfahren nach Anspruch 11, wobei das Material (2) aus der Gruppe ausgewählt wird, die besteht aus: Erdreich, Stahlspänen oder mineralischen Abgängen, vorzugsweise kontaminiert mit flüchtigen oder halbflüchtigen Kontaminanten, wie beispielsweise Öl, ölartigen oder anderen organischen Kontaminanten.

13. Verfahren nach Anspruch 11 oder 12, wobei im Mittel (14) zum Vernichten des Kontaminantendampfes wenigstens ein Teil der Kontaminanten durch Widerstandserwärmung und katalytische Oxidation aus dem Kontaminantendampf entfernt wird.

14. Verfahren nach Anspruch 13, wobei die katalytische Oxidation durch Zuführen des Stroms von Kontaminantendampfes über einen ersten Oxidationskatalysator (23), der ein Metall oder Metalloxid umfasst, ausgeführt wird, wobei der erste Oxidationskatalysator (23) ein Edelmetall umfasst, das vorzugsweise aus Rhodium, Palladium oder Platin ausgewählt ist.

## Revendications

1. Système à boucle presque fermée (1) pour nettoyer un matériau (2) contenant des contaminants comprenant :
- un moyen pour transférer de la chaleur jusqu'audit matériau (2), le moyen comprenant au moins un système de tuyauterie (3) qui comprend un tuyau (20) perforé (4) et un tuyau principal (19) de telle sorte qu'un espace soit créé entre le tuyau principal (19) et le tuyau perforé (20), dans lequel au moins l'un des tuyaux (19, 20) est thermoconducteur,
- un moyen pour forcer une vapeur de contaminant, générée en chauffant un matériau contaminé (2), et en appliquant une différence de pression à ce dernier, à une température adéquate pour provoquer la vaporisation des contaminants, à sortir dudit matériau (2) dans le système de tuyauterie (3), ledit moyen comprenant un ventilateur, un système de vide ou d'aspiration (8) raccordé au système de tuyauterie (3), et
- un premier moyen (13) pour détruire la vapeur de contaminant, ledit premier moyen (13) comprenant une entrée et une sortie, dans lequel ladite entrée est raccordée au ventilateur, au système de vide ou d'aspiration (8) pour recevoir la vapeur de contaminant et dans lequel ladite sortie est raccordée au système de tuyauterie (3) pour transférer la chaleur du moyen (13) pour détruire la vapeur de contaminant jusqu'au matériau (2), ce qui permet de fournir une boucle presque fermée ;
**caractérisé en ce que** ledit premier moyen (13) pour détruire la vapeur de contaminant comprend un premier catalyseur d'oxydation (23) et/ou un premier élément chauffant par résistance (24), dans lequel l'élément chauffant par résistance (24) et/ou le catalyseur d'oxydation sont capables, seuls ou ensemble, d'élever la température de la vapeur de contaminant à une température suffisante pour détruire ladite vapeur de contaminant reçue et **caractérisé en ce que** le système à boucle presque fermée (1) comprend un second moyen (14) pour détruire la vapeur de contaminant comprenant un second catalyseur d'oxydation et un second élément chauffant par résistance pour élever la température de la vapeur de contaminant à une température suffisante pour détruire ladite vapeur de contaminant.

2. Système selon la revendication 1, dans lequel ledit premier catalyseur d'oxydation (23) comprend un métal précieux, de préférence sélectionné parmi le rhodium, le palladium ou le platine.

3. Système selon la revendication 1 ou 2, dans lequel ledit premier catalyseur d'oxydation (23) est déposé sur un support sous la forme d'un lit granulaire ou d'un monolithe.

4. Système selon l'une quelconque des précédentes revendications 1 à 3, dans lequel ledit premier élément chauffant par résistance dans une condition de travail est capable d'élever la température dudit catalyseur d'oxydation à une température comprise entre 200 °C et 400 °C, de préférence entre 250 °C et 350 °C.

5. Système selon l'une quelconque des revendications 1 à 4, dans lequel ledit premier élément chauffant par résistance (24) est fourni sous la forme d'une bobine ou d'un fil ou d'un élément chauffant tubulaire.

6. Système selon l'une quelconque des revendications 1 à 5, dans lequel le système de vide (8) comprend un ventilateur ayant une vitesse de rotation pouvant être ajustée.

7. Système selon l'une quelconque des revendications 1 à 6, dans lequel le second moyen (14) pour détruire la vapeur de contaminant est raccordé au système de vide (8) de telle sorte que le système de vide (8) soit positionné entre ledit premier (13) et ledit second moyen (14) pour détruire la vapeur de contaminant.

8. Système selon l'une quelconque des revendications 1 à 7, comprenant en outre un moyen pour récupérer l'énergie émanant de gaz d'échappement potentiels et pour transférer cette énergie jusqu'à de l'air frais qui est utilisé pour remplacer les effluents gazeux.

9. Système selon la revendication 8, dans lequel le moyen pour récupérer de l'énergie et pour transférer de l'énergie comprend un échangeur de chaleur.

10. Utilisation d'un système à boucle presque fermée (1) selon l'une quelconque des revendications 1 à 9, pour éliminer de quelconques contaminants volatils ou semi-volatils tels que des contaminants huileux, semblables à de l'huile ou organiques, provenant de sols, de découpages de tôles ou de résidus miniers.

11. Procédé pour nettoyer un matériau (2) contenant des contaminants comprenant les étapes consistant :
a) à fournir un système selon l'une quelconque des revendications 1 à 9,
b) facultativement, à envoyer un flux de courant électrique à travers le premier élément chauffant par résistance (24) pour élever la température de la vapeur jusqu'à une température comprise entre 200 °C et 400 °C, de préférence entre 250 °C et 350 °C,
c) facultativement, à interrompre le flux de courant électrique,
d) à conduire une composition comprenant un combustible et de l'oxygène sur le premier catalyseur (23) pour une combustion, ce qui permet d'élever ladite température davantage jusqu'à une température prédéterminée T1 et à fournir un fluide chauffé de ladite température T1 suffisante pour provoquer la vaporisation des contaminants présents dans ledit matériau (2),
e) facultativement, à interrompre l'alimentation en combustible et en oxygène lorsqu'une température adéquate a été atteinte,
f) à transférer ledit fluide chauffé jusqu'au système de tuyauterie (3) et à forcer la vapeur de contaminant hors du matériau dans un ou plusieurs tuyaux perforés (20) pour obtenir un flux de la vapeur de contaminant provenant du matériau (2) dans le système (1),
g) facultativement, à ventiler au moins une partie du flux de la vapeur de contaminant provenant du système (1),
h) transférer le flux de la vapeur de contaminant jusqu'au premier moyen (13) pour détruire la vapeur de contaminant,
i) à dans ledit premier moyen (13) pour détruire la vapeur de contaminant, à conduire le flux de vapeur de contaminant sur le premier moyen pour une incinération de la vapeur de contaminant, ce qui permet d'éliminer au moins une partie des contaminants de la vapeur de contaminant et de fournir de l'énergie thermique,
j) à transférer le flux de vapeur de contaminant obtenu du matériau contaminé (2) jusqu'à un second moyen (14) pour détruire la vapeur de contaminant avant de ventiler le flux de la vapeur de contaminant provenant du système (1), ce qui permet d'éliminer au moins une partie des contaminants de la vapeur de contaminant,
k) à utiliser l'énergie thermique obtenue à l'étape j) pour chauffer le fluide chauffé qui est mis en circulation à travers le système de tuyauterie afin de chauffer le matériau contenant des contaminants pour vaporiser les contaminants restants dans le matériau, ce qui permet d'obtenir un matériau décontaminé.

12. Procédé selon la revendication 11, dans lequel le matériau (2) est sélectionné dans le groupe constitué par : les sols, les découpages de tôles ou les résidus miniers, de préférence contaminés avec de quelconques contaminants volatils ou semi-volatils tels que des contaminants huileux, semblables à de l'huile ou autres composants organiques.

13. Procédé selon la revendication 11 ou 12, dans lequel, dans ledit moyen (14) pour détruire la vapeur de contaminant, au moins une partie desdits contaminants est éliminée de ladite vapeur de contaminant au moyen d'un chauffage par résistance et d'une oxydation catalytique.

14. Procédé selon la revendication 13, dans lequel ladite oxydation catalytique est exécutée en conduisant le flux de la vapeur de contaminant sur un premier catalyseur d'oxydation (23) comprenant un métal ou un oxyde métallique, dans lequel ledit premier catalyseur d'oxydation (23) comprend un métal précieux, de préférence sélectionné parmi le rhodium, le palladium ou le platine.
